# EUROPEAN PATENT SPECIFICATION

(11) **EP 3 782 843 B1**
(45) Date of publication and mention of the grant of the patent: **03.12.2025**
(21) Application number: 18927885.6
(22) Date of filing: 23.07.2018
(51) Int. Cl.: B60L 5/26, B60L 5/32, B60L 5/30

(54) **PANTOGRAPH**
STROMABNEHMER
PANTOGRAPHE

(43) Date of publication of application: 24.02.2021
(73) Proprietor: Toyo Electric MFG. Co., Ltd., Tokyo 103-0028 (JP)
(72) Inventor: KOBAYASHI, Hayato, Yokohama-shi, Kanagawa 236-0004 (JP); NAKAJIMA, Shinji, Yokohama-shi, Kanagawa 236-0004 (JP)
(74) Representative: Haseltine Lake Kempner LLP
(86) International application number: PCT/JP2018/027568
(87) International publication number: WO 2020/021607

(56) References cited:
- EP-A2- 0 869 029
- EP-A2- 2 586 645
- JP-A- 2001 324 245
- JP-A- 2012 146 530
- JP-A- 2014 143 866
- JP-A- H04 502 250
- JP-A- H06 501 370
- JP-A- H06 501 370
- JP-A- H1 169 502
- US-A- 5 087 797

## Description

### Technical Field

The present invention relates to, as a premise that width and height directions of a car of a railway or the like are a y-axis direction and a z-direction, respectively, a pantograph which is provided with a collector shoe longitudinal in the y-axis direction, which collects electric currents by coming into sliding contact with overhead wires, and a shoe supporting member supporting the collector shoe, a framework which has upper and lower frames bendable and stretchable in the z-axis direction and supports the shoe supporting member at an upper end of the upper frame, an underframe supporting the framework, and a main shaft(s) pivoted at the underframe, which screws a lower end of the lower frame with the underframe and causes the upper frame to swing in respect to singing of the lower frame in association with rotational movements of the main shaft(s).

### Background Art

Conventionally, there has been known a pantograph, as a premise that a length direction of the car is an x-axis direction, which is provided with an actuator generating driving forces in the x-direction by being supplied air from an air source mounted on the car, a driving force transmitter transmitting the driving forces of the actuator in the x-axis direction, and a cam converting the driving forces transmitted from the driving force transmitter to torques for rotational movements of the main shaft(s). See a following first reference. In the pantograph, an air cylinder is provided for the actuator and a piston rod connected with a piston consists of the driving force transmitter. Torques in a direction that the lower frame stands are loaded to the main shaft(s) pivoted at the underframe.

It is considerable that the air cylinder disclosed in the first reference is changed to an air spring having a bellofram in order to promote miniaturization and simplification of a lifting mechanism. However, because of lower rigidity of the bellofram as compared with the air cylinder, in the case where the air spring is screwed with the underframe at an end of the x-axis direction of the air spring in a cantilever manner and the bellofram lies in the x-axis direction, even though lacks of rigidity of the bellofram are covered by providing a plurality of rods extending in the x-axis direction at outside of an outer circumference of the bellofram, the air spring is liable to incline downward because each of the rods comes down by its own weight. As a result, an x-axis directional component of elastic forces generating while expanding of the bellofram is insufficient and there is a problem that appropriate torques necessary for standing the lower frame are not loaded to the main shaft(s).

### Reference(s)

### Patent Document(s)

A first reference: Japanese publication of PCT international application No. 1994-501370. US5087797 discloses a pneumatic device for applying the upper end of a pantograph, termed a horned slipper holder, against the overhead contact wire with an appropriate pressure.

### Summary of Invention

### Technical Problems

The present invention was made in the circumstances above-mentioned and has an object to provide a pantograph that appropriate torques necessary for standing the lower frame are loaded to the main shaft in spite that the air spring is provided for the actuator, is screwed with the underframe at an end in the x-axis direction of the bellofram in a cantilever manner, and lies in the x-axis direction.

### Solution to Problems

To solve the problems above-mentioned, one of the aspects of the present invention provides a pantograph having the features of claim 1 below.

According to one of the aspects of the present invention, since the rods are supported by the guide members, each of the rods does not come down by its own weight and holds prescribed postures of the air spring. Therefore, in spite that the air spring as an actuator is connected with the underframe at an end in the x-axis direction of the air spring in a cantilever manner and the bellofram lies in the x-axis direction, the air spring does not incline downward and the air spring gives the main shaft(s) appropriate torques necessary for standing the lower frame.

Another aspect of the invention provides the pantograph in which the guiding member is a plurality of rollers and the rollers support the rods by coming rolling contact with the rods in the x-axis direction. According to another aspect of the present invention, sliding resistance during support of the rods is minimized and the second mounting plate, the rods and the arms are hard to be bent. Additionally, it is comparably easy to maintain parallelism between the rods.

### Brief Description of the Drawings

Fig.1 is a view of one of the embodiments of a pantograph of the present invention, as shown in an x-axis minus direction.
Fig. 2 is a side view of a main part of a framework and its surroundings of the pantograph shown in Fig.1.

### Description of Embodiments

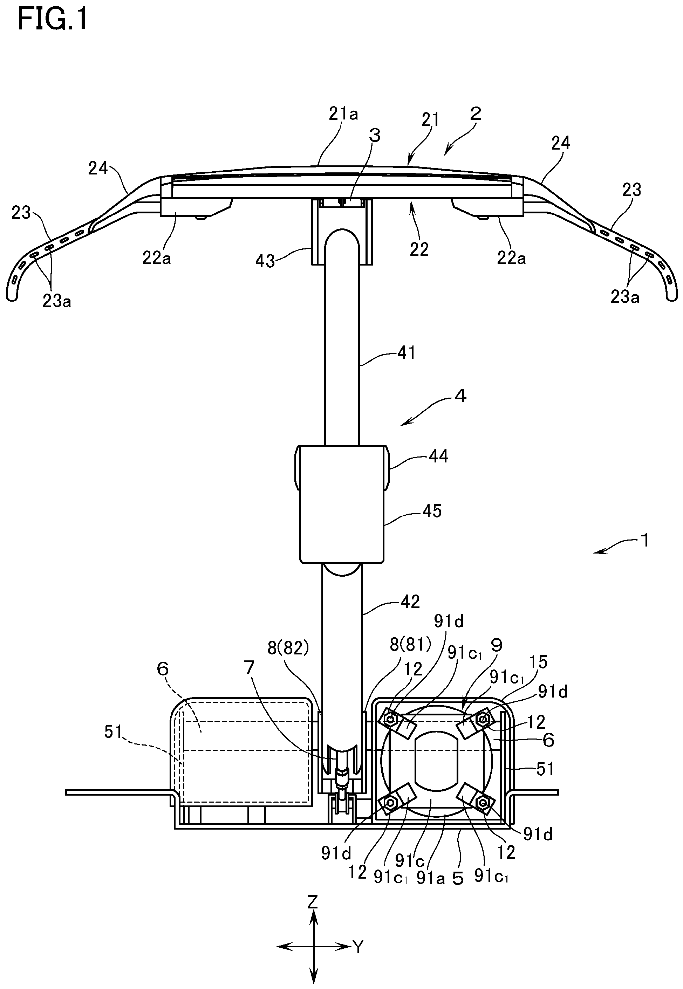

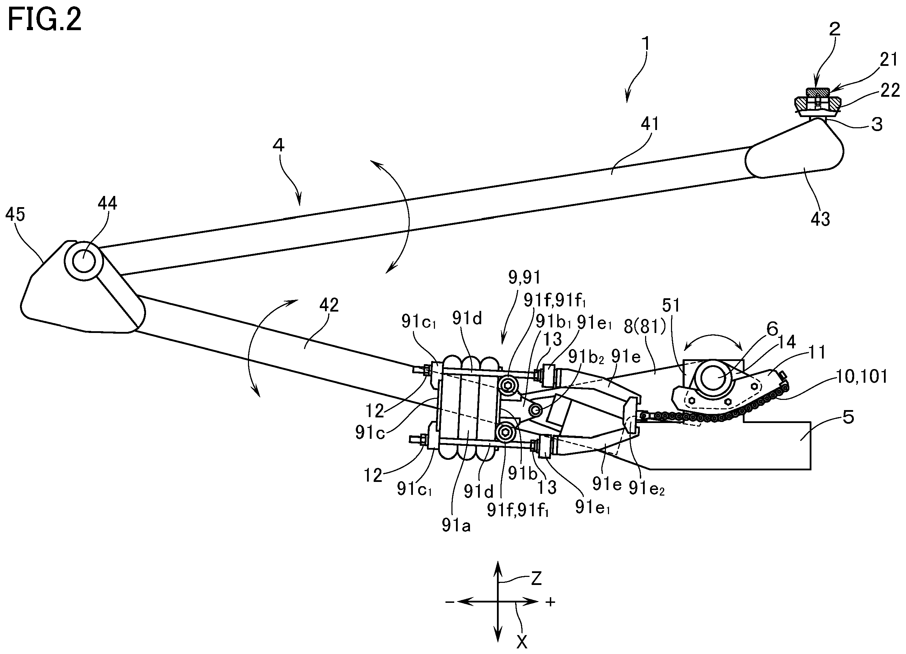

Referring to Figs. 1 and 2, a pantograph 1 is so-called a single arm pantograph. As a premise that length, width and height directions of a car are an x-direction, a y-direction and a z-direction, respectively, the pantograph 1 is provided with a collector shoe 2 longitudinal in the y-axis direction, which collects electric currents by coming into sliding contact with overhead wires, a shoe supporting member 3 supporting the collector shoe 2, a framework 4 which has upper and lower frames 41 and 42 bendably and stretchably in the z-axis direction connected with each other, and a underframe 5 supporting the framework 4. In the pantograph 1, a lower end of the lower frame 42 of the framework 4 is screwed with the underframe 5 by a main shaft(s) 6 pivoted at the underframe 5, the upper frame 41 swings in respect to swinging of the lower frame 42 in association with rotatable movements of the main shaft(s) 6.

The collector shoe 2 is provided with a slider 21, a shoe body 22 and a pair of horns 23 located apart from each other at a prescribed distance. The slider 21 has a convex curved face 21a at a center part in the y-axis direction of the slider 21 and is connected with a pair of auxiliary horns 24 at one and the other ends in the y-axis direction, respectively. The shoe body 22 has a hollow portion opened upward in the z-axis direction and extending a full length in the y-axis direction of the shoe body 22 and the slider 21 is housed in the hollow portion above-mentioned. A pair of slider supporting parts 22a are provided at one and the other ends in the y-axis direction of the shoe body 22, respectively. An elastic member such as a coil spring built-in each of the slider supporting parts 22a pushes the slider 21 upward in the z-axis direction. Each of the horns 23 is connected with an inner bottom part of each of the slider supporting parts 22a and one of the horns 23 protrudes outward from one end in the y-axis direction of one of the slider supporting parts 22a and the other of horns 23 protrudes outward from the other end in the y-axis direction of the other slider supporting part 22a. A plurality of holes 23a in and out which air flows while cars run pierce each of horns 23 in the x-direction.

A lower end of the shoe supporting member 3 is housed in a hollowed top cover 43 mounted on an upper end of the upper frame 41 of the framework 4. In the framework 4, a lower end of the upper frame 41 and an upper end of the lower frame 42 are bendably and stretchably connected with each other by a hinge having a first shaft 44. The lower end of the upper frame 41, the upper end of the lower frame 42 and hinge above-mentioned are housed in a hollowed hinge cover 45. The upper and lower frames 41 and 42 consists of a hollow member. A first balancing link maintaining constant postures of the collector shoe 2 is housed in a hollow portion of the upper frame 41 and a second balancing link 7 causing the upper frame 41 to swing in respect to swinging of the lower frame 42 is a hollow portion of the lower frame 42. An upper end of the first balancing link above-mentioned is screwed with the shoe body 3 and a lower end of the first balancing link is screwed with the upper end of the lower frame 42. An upper end of the second balancing link 7 is screwed with the lower end of the upper frame 41 and a lower end of the second balancing link 7 is screwed with the underframe 5.

At one and the other sides in the y-axis direction across the lower end of the lower frame 42, a pair of connecting plates 8 extending in the x-axis direction are provided, respectively. The main shaft 6 extends from a connecting plate 81 as one of the connecting plates 8, which is located at one side in the y-axis direction, to one side in the y-axis direction and the main shaft 6 also extends from a connecting plate 82 as the other of connecting plates 8, which is located at the other side in the y-direction, to the other side in the y-direction. In other words, the main shafts 6 consist of a pair in the y-axis direction. The pair is located on the same axis. A main shaft supporting part 51 extending upward in the z-axis direction is provided with each of one and the other ends in the y-axis direction of the underframe 5. An end of each of main shafts 6, which is located apart from each of connecting plates 8, is pivoted at each of the main shaft supporting pats 51.

Additionally, the pantograph 1 is provided with an air spring 91 as an actuator 9 generating driving forces in the x-axis direction by being supplied air from an air source mounted on the car, a chain 101 as a driving force transmitter 10 transmitting elastic forces of the air spring 91, i.e., driving forces of the actuator 9, and a cam 11, which is connected with one of the main shafts 6 and the chain 101, converting the elastic forces transmitted from the chain 101 to torques causing the main shafts 6 to rotatably move. As another premise that a direction coming near the main shaft 6 is an x-axis plus direction and a direction going way from the main shaft 6 is an x-axis minus direction, the air spring 91 has a bellofram 91a expanding and shrinking in the x-axis direction in association with supply and exhaustion of air and a first mounting plate 91b is provided at an end in the x-axis plus direction of the bellofram 91a. The bellofram 91a is screwed with the underframe 5 at the first mounting plate 91b in a cantilever manner. A pair of first connecting pieces 91b₁, one of which is located at one side in the y-axis direction and the other of which is located at the other side in the y-axis direction, are provided with the first mounting plate 91b. Each of the connecting pieces 91b₁ extends in the x-axis plus direction. A pair of shaft hole piercing each of the first connecting pieces 91b₁ in the y-axis direction are located on the same axis. An end in the x-axis minus direction of the underframe 5 is bent upward in the z-axis direction and a shaft hole also piercing the end as above-mentioned. The air spring 91 is screwed with the underframe 5 in a cantilever manner by locating the end in the x-axis minus direction of the underframe 5 between a pair of the first connecting pieces 91b₁ and by inserting a second shaft 91b₂ into such shaft holes as above-mentioned.

Additionally, the air spring 91 is provided with a second mounting plate 91c mounted on an end in the x-axis minus direction of the bellofram 91a and a plurality of rods 91d, which are located at outside of an outer circumference of the bellofram 91a, are connected with the second mounting plate 91c and extend in the x-axis plus direction. The air spring 91 is also provided with a plurality of arms 91e and a plurality of rollers 91f₁ as a guiding member 91f. The chain 101 is connected with an end in the x-axis plus direction of each of the arms 91e and the rods 91d are connected with an end in the x-axis minus direction of the arms 91e. Each of the rollers 91f₁ is screwed with the first mounting plate 91b and movably supports corresponding one of the rods 91 in the x-axis direction. In the embodiment, there are four rods 91d. Specifically, two rods 91a apart from each other in the z-axis direction at a prescribed distance are located at one and the other parts in the y-axis direction of the second mounting plate 91c, respectively. Two ends in the x-axis minus and x-axis plus directions of four rods 91d are grooved. Four second connecting pieces 91c₁ extend radially and each of the second connecting pieces 91c₁ is located at an end in the x-minus direction of the corresponding rod 91d and at the second mounting plate 91c. An inserting hole piercing each of second connecting pieces 91c₁ in the x-axis direction is formed. Each of the rods 91d is connected with the second mounting plate 91c by inserting an end in x-axis minus direction of each of the rods 91d into the corresponding inserting hole above-mentioned and screwing a first nut 12 in the x-axis plus direction. A second connecting frame 91e₁ is provided with an end in the x-axis minus direction of each of the arms 91e. There are four second connecting frames 91e₁. In the four second connecting frames 91e₁, two second connecting frames 91e₁ are located apart from each other in the z-axis direction and the rest two second connecting frames 91e₁ are located apart from each other in the y-axis direction. The two rods 91d located at an upper side in the z-axis direction are connected with the two connecting frames 91e₁ located at an upper side in the z-axis direction by a second nut 13, respectively, and the rest two rods 91d located at a lower side in the z-axis direction are connected with the two connecting frames 91e₁ located at a lower side in the z-axis direction by the second nut 13, respectively.

A third connecting plate 91e₂ is provided with an end in the x-axis plus direction of all of the arms 91e. An end in the x-axis minus direction of the chain 101 is connected with the third connecting plate 91e₂. An end in the x-axis plus direction of the chain 101 is connected with an end of the x-axis plus direction of the cam 11 having a cam face shaped convex downward. When air in the bellofram 91a is exhausted and the bellofram 91a shrinks, since one of the main shafts 6 rotatably moves in a counterclockwise direction by own weights of the lower frame 42 and members located upward in the z-axis direction other than the lower frame 42, the chain 101 is tensioned all the time. The chain 101 pushes the cam face of the cam 11 upward by such a tension and does not hang down from the cam face. Herein, the cam 11 is screwed with a fixing plate 14 fitted to an end in the y-direction of one of the main shafts 6 located at one side in the y-axis direction.

Further, there are four rollers 91f₁. The number of the rollers 91f₁ is equal to the number of the rods 91a. Specifically, two rollers 91f₁ consisting of a pair are located apart from each other in the z-axis direction at a prescribed distance and two pairs are located at one and the other sides in the y-direction of the first mounting plate 91b. Each of the rollers 91f₁ is able to roll by being screwed with the first mounting plate 91b. Each of the rollers 91f₁ located at an upper side in the z-axis direction comes into rolling contact with a lower side of each of the rods 91d, which is located at an upper side in the z-axis direction, and each of the rollers 91f₁ located at a lower side in the z-axis direction comes into rolling contact with an upper side of each of the rods 91d, which is located at a lower side in the z-axis direction. Therefore, translation in the x-axis plus and minus directions of all of the rods 91d in association with expanding and shrinking of the bellofram 91a is supported by all of the rollers 91f₁. Since all of the rods 91d are supported by all of the rollers 91f₁, any of the rods 91d does not come down by its own weight and holds prescribed postures of the air spring 91. Accordingly, though the air spring 91 as an actuator 9 is connected with the underframe 5 at the end in the x-axis plus direction in a cantilever manner and the bellofram 91a lies in the x-axis direction, the air spring 91 does not incline downward and the air spring 91 loads appropriate torques necessary for standing the lower frame 42. Bushes as well as the rollers 91f₁ 91d may be adopted to the guiding member 91. On the other hand, since all of the rollers 91f₁ support all of the rods 91d by coming into rolling contact with all of the rods 91d, sliding resistance of each of the rods 91d is more lowered as compared with bushes and bending of the second mounting plate 91c, rods 91d and arms 91e is hard to occur. In addition, parallelization of all of the rods 91d is more easily maintained.

When air is supplied in the bellofram 91a from the air source, the bellofram 91a expands in the x-axis minus direction. All of the rods 91d and arms 91e translate in the x-axis minus direction and the chain 101 also translates in the x-axis minus direction by expansion of bellofram 91a. The translation of the chain 101 is converted to a torque causing the main shafts 6 to rotatably move by the cam 11 via the fixing plate 14 and the main shafts 6 rotatably move in a clockwise direction. When the main shafts 6 rotatably move in clock wise direction, since the lower frame 42 swings in a clockwise direction and the upper frame 41 swings in a counterclockwise direction, the pantograph 1 is elevated. On the other hand, when air fully supplied in the bellofram 91a is exhausted, since the bellofram 91a shrinks, the upper frame 41 swings in the clockwise direction by own weight of the collector shoe 2, the main shafts 6 rotatably move in the counterclockwise direction, and the lower frame 42 swings in the counterclockwise direction. As a result, the pantograph is folded.

The pantograph 1 is provided with a hollowed roof cover 15 covering the air spring 91, the chain 101, the cam 11, the main shafts 6 and a part of the underframe 5 located near those members. All of the members above-mentioned are housed in the roof cover 15.

### Expression of symbols

- 1: Pantograph
- 2: Collector shoe
- 3: Shoe supporting member
- 4: Framework
- 41: Upper frame
- 42: Lower frame
- 5: Underframe
- 6: Main shaft(s)
- 9: Actuator
- 91: Air spring
- 91a: Bellofram
- 91b: First mounting plate
- 91c: Second mounting plate
- 91d: Rods
- 91e: Arms
- 91f: Guiding member
- 91f₁: Rollers as guiding member 91f
- 10: Driving force transmitter
- 101: Chain as driving force transmitter 10
- 11: Cam

## Claims

1. A pantograph (1) comprising, as a premise that width and height directions of a car are a y-axis direction and a z-direction, respectively,
- a collector shoe (2) longitudinal in the y-axis direction, which collects electric currents by coming into sliding contact with overhead wires;
- a shoe supporting member (3) supporting the collector shoe (2);
- a framework (4) having swingable upper and lower frames (41, 42) in the z-axis direction, in which a lower end of the upper frame (41) is connected with an upper end of the lower frame (42) by a hinge, the framework (4) supporting the shoe supporting member (3) at an upper end of the upper frame (41);
- an underframe (5) supporting the framework (4);
- a main shaft(s) (6) pivoted at the underframe (5), which screws the lower end of the lower frame (42) with the underframe (5) and causes the upper frame (41) to swing in respect to swinging of the lower frame (42) in association with rotational movements of the main shaft(s) (6);
- an actuator (9) having a cylindrical portion and generating driving forces in the x-axis direction by being supplied air with the cylindrical portion from an air source provided for the car;
- a driving force transmitter (10) connected with the actuator (9) and transmitting the driving forces of the actuator (9) in the x-axis direction;
- a cam (11) connected with the main shaft(s) (6) and the driving force transmitter (10) and converting the driving forces transmitted from the driving force transmitter (10) to torques to cause the main shaft(s) (6) to rotatably move;
**characterized in that**:
as another premise that a direction that the actuator (9) translates near the main shaft(s) (6) is an x-axis plus direction and a direction that the actuator (9) translates away from the main shaft(s) (6) is an x-axis minus direction, an air spring (91) as the actuator (9) has a bellofram (91a) which is expandable and shrinkable in the x-axis direction in association with supply and exhaustion of air, generates elastic force as the driving forces and is screwed with the underframe (5) in a manner of a cantilever,
the air spring (91) further including,
- a first mounting plate (91b) provided at an end in the x-axis plus direction of the bellofram (91a), at which the air spring (91) is screwed with the underframe (5);
- a second mounting plate (91c) fitted to an end in the x-axis minus direction of the bellofram (91a);
- a plurality of rods (91d) extending in the x-axis plus direction, which are located at outside of an outer circumference of the bellofram (91a), and are connected with the second mounting plate (91c);
- a plurality of arms (91e) extending in the x-axis direction, with an end in the x-axis minus direction of each of which each of the rods (9d) is connected;
- a third mounting plate (91e₂) provided an end in the x-axis plus direction of all of the arms (91e), with which the driving force transmitter (10) is connected; and
- a guiding member (91f) screwed with the first mounting plate (91b) and movably supporting each of the rods (91d) in the x-axis direction.

2. The pantograph (1) as claimed in claim 1, wherein the guiding member (91f) is a plurality of rollers (91f₁) and the rollers (91f₁) support the rods (91d) by coming rolling contact with the rods (91d) in the x-axis direction.

## Patentansprüche

1. Stromabnehmer (1), umfassend, unter der Prämisse, dass die Breiten- und Höhenrichtungen eines Wagens eine y-Achsenrichtung beziehungsweise eine z-Richtung sind,
- eine in y-Achsenrichtung längliche Schleifleiste (2), die durch Gleitkontakt mit Oberleitungen elektrische Ströme sammelt;
- ein Schleifleisten-Tragelement (3), das die Schleifleiste (2) trägt;
- ein Gerüst (4) mit schwenkbaren oberen und unteren Rahmen (41, 42) in z-Achsenrichtung, bei dem ein unteres Ende des oberen Rahmens (41) mit einem oberen Ende des unteren Rahmens (42) durch ein Scharnier verbunden ist, wobei das Gerüst (4) das Schleifleisten-Tragelement (3) an einem oberen Ende des oberen Rahmens (41) trägt;
- ein Untergestell (5), das das Gerüst (4) trägt;
- eine Hauptwelle(n) (6), die am Untergestell (5) gelagert ist/sind, die das untere Ende des unteren Rahmens (42) mit dem Untergestell (5) verschraubt und den oberen Rahmen (41) in Bezug auf das Schwingen des unteren Rahmens (42) in Verbindung mit Drehbewegungen der Hauptwelle(n) (6) zum Schwingen veranlasst;
- einen Aktuator (9), der einen zylindrischen Abschnitt aufweist und Antriebskräfte in x-Achsenrichtung erzeugt, indem er mit dem zylindrischen Abschnitt von einer für den Wagen vorgesehenen Luftquelle mit Luft versorgt wird;
- einen Antriebskraftüberträger (10), der mit dem Aktuator (9) verbunden ist und die Antriebskräfte des Aktuators (9) in x-Achsenrichtung überträgt;
- einen Nocken (11), der mit der Hauptwelle(n) (6) und dem Antriebskraftüberträger (10) verbunden ist und die vom Antriebskraftüberträger (10) übertragenen Antriebskräfte in Drehmomente umwandelt, um die Hauptwelle(n) (6) zur Drehbewegung zu veranlassen;
**dadurch gekennzeichnet, dass**:
unter einer weiteren Prämisse, dass eine Richtung, in die sich der Aktuator (9) in der Nähe der Hauptwelle(n) (6) verschiebt, eine x-Achsen-Plus-Richtung ist und eine Richtung, in die sich der Aktuator (9) von der Hauptwelle(n) (6) wegbewegt, eine x-Achsen-Minus-Richtung ist, eine Luftfeder (91) als Aktuator (9) einen Balg (91a) aufweist, der in x-Achsenrichtung in Verbindung mit der Zufuhr und dem Ablassen von Luft ausdehnbar und schrumpfbar ist, elastische Kraft als Antriebskräfte erzeugt und mit dem Untergestell (5) freitragend verschraubt ist,
die Luftfeder (91) ferner beinhaltend,
- eine erste Montageplatte (91b), die an einem Ende in x-Achsen-Plus-Richtung des Balges (91a) vorgesehen ist, an der die Luftfeder (91) mit dem Untergestell (5) verschraubt ist;
- eine zweite Montageplatte (91c), die an einem Ende in x-Achsen-Minus-Richtung des Balges (91a) angebracht ist;
- eine Vielzahl von Stangen (91d), die sich in x-Achsen-Plus-Richtung erstrecken, die sich außerhalb eines Außenumfangs des Balges (91a) befinden und mit der zweiten Montageplatte (91c) verbunden sind;
- eine Vielzahl von Armen (91e), die sich in x-Achsenrichtung erstrecken, wobei mit einem Ende in x-Achsen-Minus-Richtung von jedem von ihnen jede der Stangen (9d) verbunden ist;
- eine dritte Montageplatte (91e₂), die an einem Ende in x-Achsen-Plus-Richtung aller Arme (91e) vorgesehen ist, mit der der Antriebskraftüberträger (10) verbunden ist; und
- ein Führungselement (91f), das mit der ersten Montageplatte (91b) verschraubt ist und jede der Stangen (91d) in x-Achsenrichtung beweglich lagert.

2. Stromabnehmer (1) nach Anspruch 1, wobei das Führungselement (91f) eine Vielzahl von Rollen (91f₁) ist und die Rollen (91f₁) die Stangen (91d) durch Rollkontakt mit den Stangen (91d) in x-Achsenrichtung lagern.

## Revendications

1. Pantographe (1) comprenant, en partant du principe que les directions de largeur et de hauteur d'une voiture sont respectivement une direction d'axe y et une direction z,
- un frotteur (2) longitudinal dans la direction d'axe y, qui collecte les courants électriques en entrant en contact coulissant avec les fils aériens ;
- un élément de support de patin (3) supportant le frotteur (2) ;
- une ossature (4) ayant des cadres supérieur et inférieur pivotants (41, 42) dans la direction d'axe z, dans laquelle une extrémité inférieure du cadre supérieur (41) est reliée à une extrémité supérieure du cadre inférieur (42) par une charnière, l'ossature (4) supportant l'élément de support de patin (3) au niveau d'une extrémité supérieure du cadre supérieur (41) ;
- un sous-châssis (5) supportant l'ossature (4) ;
- un ou plusieurs arbres principaux (6) pivotant au niveau du sous-châssis (5), qui visse l'extrémité inférieure du cadre inférieur (42) au sous-châssis (5) et provoque le pivotement du cadre supérieur (41) par rapport au pivotement du cadre inférieur (42) en association avec les mouvements de rotation du ou des arbres principaux (6) ;
- un actionneur (9) ayant une partie cylindrique et générant des forces motrices dans la direction d'axe x en étant alimenté en air par la partie cylindrique à partir d'une source d'air prévue pour la voiture ;
- un transmetteur de forces motrices (10) relié à l'actionneur (9) et transmettant les forces motrices de l'actionneur (9) dans la direction d'axe x ;
- une came (11) reliée à l'arbre ou aux arbres principaux (6) et au transmetteur de forces motrices (10) et convertissant les forces motrices transmises par le transmetteur de forces motrices (10) en couples pour provoquer le déplacement en rotation du ou des arbres principaux (6) ;
**caractérisé en ce que** :
en partant en outre du principe qu'une direction dans laquelle l'actionneur (9) se déplace en translation à proximité du ou des arbres principaux (6) est une direction vers les valeurs positives de l'axe x et qu'une direction dans laquelle l'actionneur (9) se déplace en translation à l'opposé du ou des arbres principaux (6) est une direction vers les valeurs négatives de l'axe x, un ressort pneumatique (91) comme l'actionneur (9) a un dispositif bellofram (91a) qui est extensible et rétractable dans la direction d'axe x en association avec l'alimentation et l'échappement d'air, génère une force élastique comme forces motrices et est vissé au sous-châssis (5) à la manière d'un porte-à-faux,
le ressort pneumatique (91) comprenant en outre,
- une première plaque de montage (91b) prévue au niveau d'une extrémité dans la direction vers les valeurs positives de l'axe x du dispositif bellofram (91a), au niveau de laquelle le ressort pneumatique (91) est vissé au sous-châssis (5) ;
- une deuxième plaque de montage (91c) ajustée sur une extrémité dans la direction vers les valeurs négatives de l'axe x du dispositif bellofram (91a) ;
- une pluralité de tiges (91d) s'étendant dans la direction vers les positives de l'axe x, qui sont situées à l'extérieur d'une circonférence extérieure du dispositif bellofram (91a), et sont reliées à la deuxième plaque de montage (91c) ;
- une pluralité de bras (91e) s'étendant dans la direction d'axe x, à une extrémité dans la direction vers les valeurs négatives de l'axe x de chacune desquelles chacune des tiges (9d) est reliée ;
- une troisième plaque de montage (91e2) prévue au niveau d'une extrémité dans la direction vers les valeurs positives de l'axe x de l'ensemble des bras (91e), avec laquelle le transmetteur de forces motrices (10) est relié ; et
- un élément de guidage (91f) vissé à la première plaque de montage (91b) et supportant de manière mobile chacune des tiges (91d) dans la direction d'axe x.

2. Pantographe (1) selon la revendication 1, dans lequel l'élément de guidage (91f) est une pluralité de rouleaux (91f₁) et les rouleaux (91f₁) supportent les tiges (91d) en entrant en contact de roulement avec les tiges (91d) dans la direction d'axe x.
